(19) Europäisches Patentamt
European Patent Office
Office européen des brevets

(11) Veröffentlichungsnummer: **0 211 798 B1**

(12) **EUROPÄISCHE PATENTSCHRIFT**

(45) Veröffentlichungstag der Patentschrift: 10.10.90

(51) Int. Cl.⁵: **B 60 B 39/00**

(21) Anmeldenummer: 86730114.5

(22) Anmeldetag: 17.07.86

(54) Gleitschutzvorrichtung für Kraftfahrzeuge.

(30) Priorität: 19.07.85 DE 3526360

(43) Veröffentlichungstag der Anmeldung:
25.02.87 Patentblatt 87/09

(45) Bekanntmachung des Hinweises auf die
Patenterteilung:
10.10.90 Patentblatt 90/41

(84) Benannte Vertragsstaaten:
AT BE CH DE FR GB IT LI NL SE

(56) Entgegenhaltungen:
DE-A-3 526 356
DE-U-8 521 267
DE-U-8 521 268
DE-U-8 526 271
US-A-1 374 252
US-A-2 241 923
US-A-2 747 691
US-A-2 815 828

(73) Patentinhaber: RUD-Kettenfabrik Rieger & Dietz
GmbH u. Co.
Friedensinsel
D-7080 Aalen 1 (DE)

(72) Erfinder: Rieger, Hansjörg, Dr.-Ing.
Saarstrasse 48
D-7080 Aalen (DE)
Erfinder: Biehler, Wolfgang
Eisenschmiede 2
D-7080 Aalen-Unterkochen (DE)

(74) Vertreter: Böning, Manfred, Dr. Ing. et al
Patentanwälte Dipl.-Ing. Dieter Jander Dr. Ing.
Manfred Böning Kurfürstendamm 66
D-1000 Berlin 15 (DE)

## Beschreibung

Die Erfindung betrifft eine Gleitschutzvorrichtung für Kraftfahrzeuge mit mehreren von einem in eine Umlaufbewegung versetzbaren Halter gehaltenen, über elastische Spreizarme bildende Zwischenstücke mit diesem verbundenen Kettensträngen, deren dem Halter abgewandte Enden bei in der Betriebsstellung umlaufendem Halter unter Fliehkrafteinwirkung vom Halter weggeschleudert werden, und von denen zumindet Teile bei sich drehendem Farhzeugreifen den Bereich der Bodenberührungsfläche des Reifens passieren.

Ein Gleitschutzkette der vorstehenden Art, bei der sich an jedes Zwischenstück ein einzelner Kettenstrang aus Gliedern vergleichsweise großer Nenndicke anschließt, ist aus der DE-OS 29 14 366 bekannt. Ihr Vorteil gegenüber üblichen Gleitschutzketten besteht darin, daß sie eine zeitraubende Kettenmontage überflüssig macht. Der Fahrer eines Fahrzeuges, insbesondere Nutzfahrzeuges, kann die Gleitschutzvorrichtung vielmehr ohne den Fahrersitz zu verlassen aus einer Ruhestellung in eine Betriebsstellung überführen und umgekehrt. Wenn die bekannten und ähnlich aufgebauten Gleitschutzvorrichtungen gleichwohl wenig in die Praxis Eingang gefunden haben, so liegt dies insbesondere daran, daß ihre Gleitschutzeigenschaften zu wünschen übrig lassen. So ist insbesondere bei niedrigen Fahrzeuggeschwindigkeiten keine Gewähr dafür gegeben, daß Gleitschutzelemente in hinreichender Zahl in den Bereich der Bodenberührungsfläche des Reifens gelangen. Der Reifen "nimmt"—wenn man so will—"die Kettenstränge nicht an". Hinzu kommt, daß Abrollkomfort des Reifens bei Einsatz der bekannten Vorrichtung stark beeinträchtigt ist und ihre Kettenstränge trotz der Verwendung elastischer Spreizarme zur sogenannten Zopfbildung neigen, die sich hier deshalb als außerordentlich kritisch erweist, weil die Spreizarme aus einem von einem Seilstück oder einem Kettenstrangabschnitt gebildeten Kern und einem diesen umschließenden elastischen Gummimantel bestehen, über den der Anschluß der Spreizarme an den Halter erfolgt. Bei einer Zopfbildung, aber auch bei normalem Betrieb können die im Bereich der Anschlußstellen wirksam wirkenden Kräfte nämlich Werte annehmen, denen die Gummimantelverankerung nicht standhält.

Bekannt ist außerdem aus der US-PS 30 68 949 eine ähnlich aufgebaute Gleitschutzvorrichtung, bei der anstelle von Kettensträngen elastische speicherartige Gebilde verwendet werden, die über metallische Zugfedern an den Halter angeschlossen sind. Diese Vorrichtung bietet zwar den Vorteil, daß ihre Gleitschutzelemente unabhängig von der auf sie ausgeübten Fliehkraft in den Bereich der Bodenberührungsfläche des Reifens bewegt werden und die Gefahr einer Zopfbildung bei ihnen eliminiert ist. Ihre Gleitschutzeigenschaften sind indessen unbefriedigend. Darüberhinaus löst die elastische Ausbildung der Speichen selbst und ihr Anschluß über eine Zugfeder an den Halter bei der Freigabe der Speichen nach dem Passieren des Reifens einen Peitscheneffekt aus, der zu Beschädigungen nicht nur aufeinanderfolgender Speichen sondern auch von Teilen des Fahrzeuges führen kann.

Gleitschutzvorrichtungen mit von starren oder elastischen Speichen gebildeten Gleitschutzelementen haben sich im übrigen auch deshalb nicht durchzusetzen vermocht, weil ihre raumsparende Unterbringung in der Außenbetriebsstellung gar nicht oder aber allenfalls unter Inkaufnahme eines erheblichen konstruktiven Aufwandes möglich ist.

Der Erfindung liegt die Aufgabe zugrunde, eine Gleitschutzvorrichtung der in Betracht gezogenen Art zu schaffen, die unter Beibehaltung von durch einen Halter nach außen schleuderbaren Kettensträngen als besonders griffige Gleitschutzelemente deutlich verbesserte Gleitschutzeigenschaften und Abrollverhältnisse gegenüber bekannten einschlägigen Vorrichtungen bietet, wobei zugleich eine verlängerte Standzeit der Kettenstränge und eine einfachere Überwachbarkeit ihres Verschleißverhaltens angestrebt wird.

Diese Aufgabe wird erfindungsgemäß dadurch gelöst, daß bei einer Gleitschutzvorrichtung der eingangs genannten Art mindestens an einigen, vorzugsweise aber an allen Zwischenstücken Kettenstranggruppen aus mindestens zwei Kettensträngen angreifen.

Die erfindungsgemäße Gleitschutzvorrichtung bietet eine Reihe entscheidender Vorteile. Infolge des Ersatzes einzelner Kettenstränge durch Kettenstranggruppen, die über die Spreizarme bildende Verbindungsstücke am Halter angreifen, können die Kettenstränge aus kleineren Gliedern als bisher bestehen. Feingliedrige Kettenstränge aber sind leichter in den Keilspalt zwischen Reifen und Fahrbahn einführbar als grobgliedrige. Gleichzeitig wird eine gleichmäßigere Verteilung der von den Kettengliedern gebildeten Greifelemente über die Bodenberührungsfläche des Reifens erreicht und auf diese Weise nicht nur die Gleitschutzwirkung sondern auch das Abrollverhalten des Reifens positiv beeinflußt. Wie bei Versuchen festgestellt werden konnte, paßt sich die erfindungsgemäße Gleitschutzvorrichtung zudem in bestimmten Grenzen an die vom Reifen zu übertragenden Umfangskräfte an, indem es bei der Übertragung großer Umfangskräfte zu einer Überlagerung von Kettensträngen einer Kettenstranggruppe kommt. Da die Kettenstränge der einzelnen Kettenstranggruppen normalerweise die Bodenberührungsfläche des Reifens annähernd fächerartig passieren, findet eine Art Stufenverschleiß statt, d.h. der erste Strang schützt den oder die nachfolgenden, die nach dem Verschleiß des ersten Stranges noch ihre volle Funktionsfähigkeit haben. Auch werden kritische Zopfbildungen weitgehend verhindert, da die sich bei Betrieb auffächernden Kettenstränge der einzelnen Kettenstranggruppen Drehungen der Gruppen und der Verbindungsstücke um eine gemeinsame Achse entgegenwirken. Die elastischen Spreizarme führen die Kettenstranggruppen in die optimale Einlaufposition. Ein störender Peitscheneffekt beim Austreten der Gleitschutzelemente aus dem Abrollbereich des Reifens wird dadurch vermieden, daß die Kettenstränge der Kettenstranggruppen nicht schlagartig auf einmal, sondern sukzessive vom Reifen freigegeben werden.

Besonders günstige Verhältnisse erhält man, wenn die Kettenstranggruppen aus drei bis fünf, vorzugsweise aus vier Kettensträngen bestehen und über den Umfang des Halters fünft bis sieben, vorzugsweise sechs Kettenstranggruppen verteilt sind.

Die Glieder der Kettenstränge der Kettenstranggruppen werden zweckmäßigerweise derart größenmäßig auf den von Außendurchmesser des Fahrzeugreifens abhängigen Keilspalt zwischen Fahrzeugreifen und Fahrbahn abgestimmt, daß sie auf glatter Fahrbahn durch Reibschluß im Keilspalt gehalten werden. In der Praxis haben sich Kettenstränge aus Gliedern mit einer Nenndicke von 4 oder 5 mm gut bewährt.

Die Spreizarme bildenden Verbindungsstücke bestehen bei einer bevorzugten Ausführungsform der Erfindung aus Kettenstrangabschnitten, die jeweils von einer zu ihrer Versteifung dienenden Schraubenfeder umgeben sind, deren Windungen einen Abstand voneinander einnehmen und die als durch die Kettenstrangabschnitte vorgespannte Druckfedern ausgebildet sind.

Weitere Einzelheiten und Merkmale der Erfindung ergeben sich aus den Unteransprüchen und der nachstehenden Beschreibung mehrerer in der beigefügten Zeichnung dargestellter Ausführungsbeispiele. Es ziegen

Figur 1 die perspektivische Ansicht einer sich im Einsatz befindlichen Gleitschutzvorrichtung,

Figur 2 schematisch die Stirnansicht einer sich im Einsatz befindlichen Gleitschutzvorrichtung,

Figur 3 schematisch die Anordnung der Kettenstranggruppen beim Passieren der Bodenberührungsfläche des Reifens,

Figur 4 unterschiedlich große Kettenglieder im Keilspalt zwischen Fahrzeugreifen und Fahrbahn,

Figuren 5—8 Teildraufsichten von Gleitschutzvorrichtungen mit unterschiedlich ausgebildeten Zwischenstücken,

Figur 9 einen Schnitt durch eine Gleitschutzvorrichtung mit einer Rutschkupplung,

Figur 10 einen Schnitt durch eine mit einem Übersetzungsgetriebe und einer Rutschkupplung ausgestatteten Gleitschutzvorrichtung,

Figur 11 einen Schnitt durch einen modifizierten Halter einer Gleitschutzvorrichtung und

Figur 12 die Draufsicht auf den Halter gemäß Figur 11.

In den Figuren werden für sich funktionsmäßig entsprechende Teile gleiche Bezugszeichen verwendet.

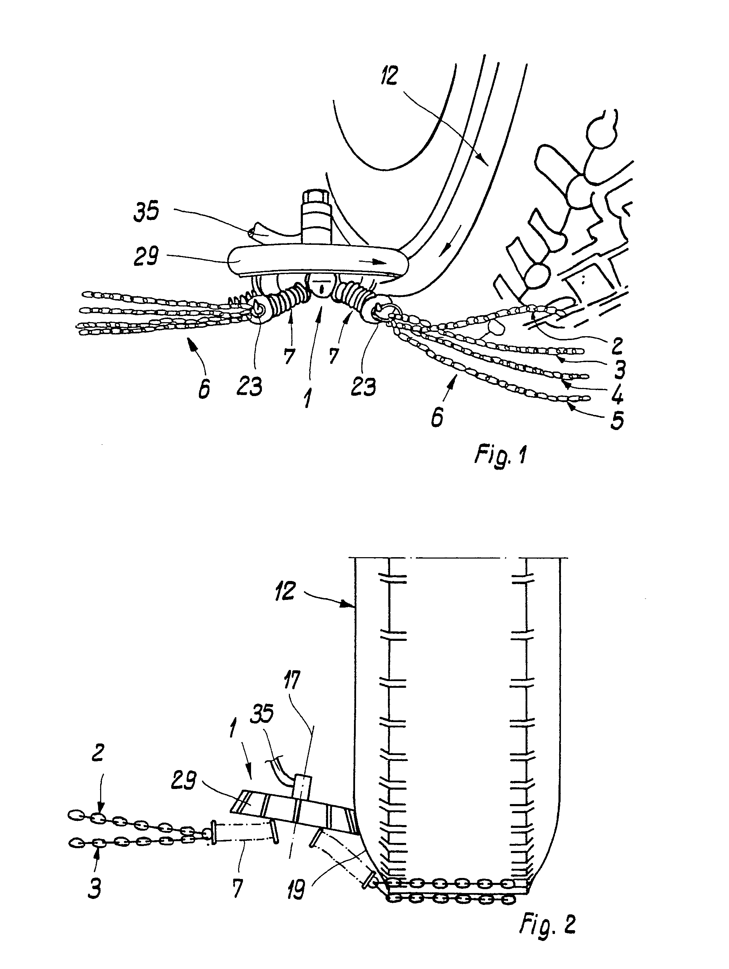

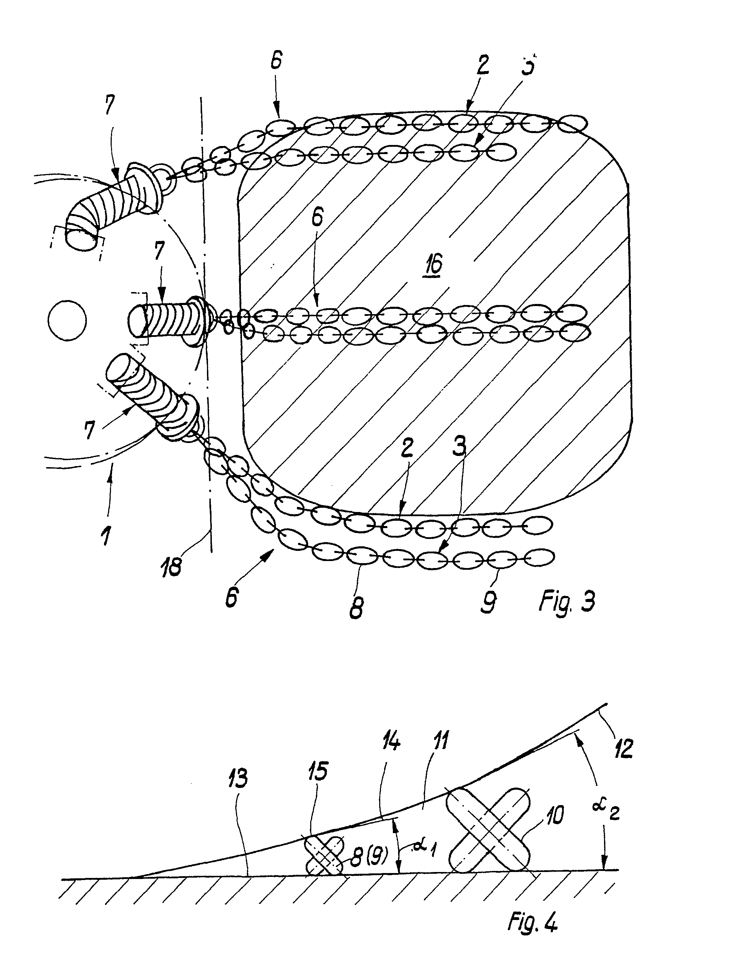

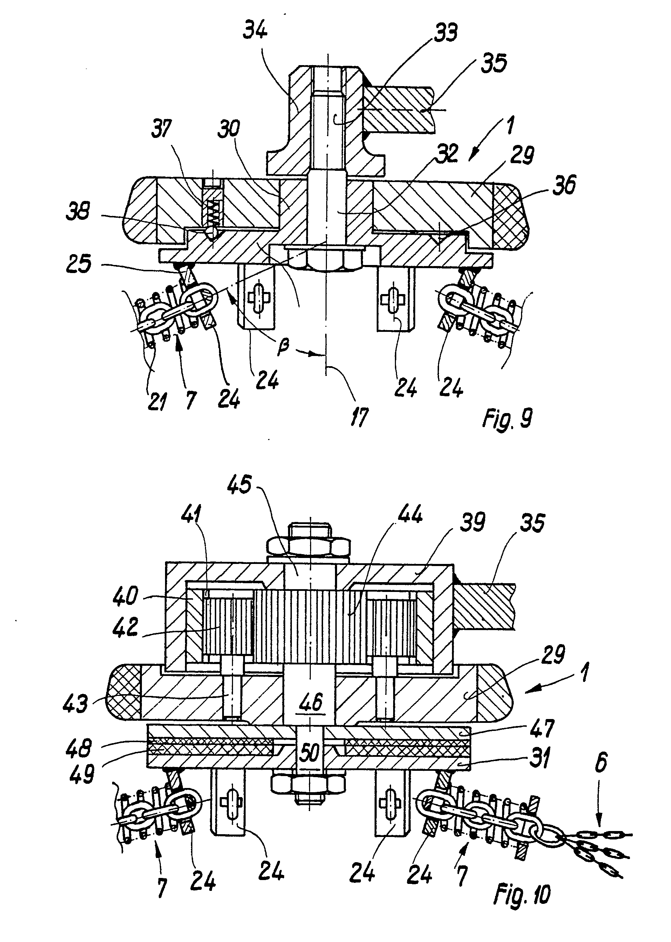

In Fig. 1 ist 1 der Halter einer Gleitschutzvorrichtung, der so aufgebaut sein sollte, wie dies in den besonders vorteilhafte Lösungen zeigenden Figuren 9 und 10 dargestellt ist. Der Halter 1 weist sechs gleichmäßig über seinen Umfang verteilte, vorzugsweise aus jeweils vier Kettensträngen 2, 3, 4 und 5 bestehende, allgemein mit 6 bezeichnete Kettenstranggruppen auf, von denen in Fig. 1 lediglich zwei dargestellt wurden. Die einzelnen Kettenstranggruppen 6 sind über elastische Spreizarme bildende Zwischenstücke 7 mit dem Halter verbunden. Wie in Fig. 3, oben, angedeutet, können die Kettenstränge 2 und 3 ungleich lang oder aber, wie in Fig. 3, unten, gezeigt, aus Gliedern 8 und 9 unterschiedlicher Abmessungen bestehen, wobei die den freien Enden der Kettenstränge 2 und 3 zugeordneten Glieder 9 kleinere Abmessungen als die den Halter 1 näher gelegenen Glieder 8 haben.

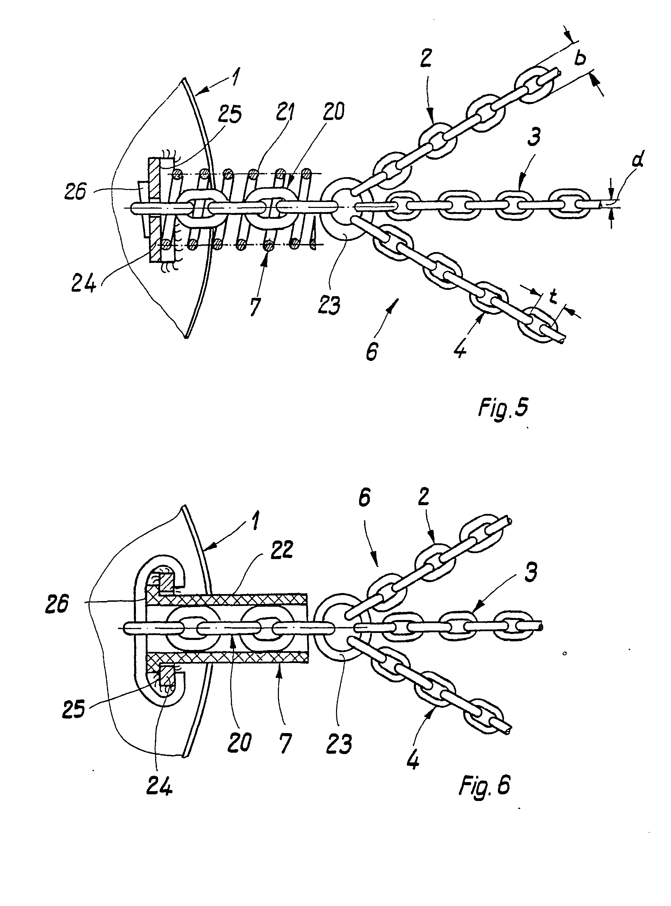

Durch die Verwendung von gruppen- oder bündelartig zusammengefaßten Kettensträngen 2, 3, 4, 5 bzw. 2, 3, 4 bzw. 2, 3 anstelle einzelner Kettenstränge wird die Möglichkeit zur Verwendung von Kettengliedern 8, 9 vergleichsweise kleiner Abmessungen geschaffen, d.h. von Kettengliedern, deren Nenndicke $d$ maximal 5 mm, deren äußere Breite $b$ höchstens gleich der dreieinhalbfachen Nenndicke $d$ und deren Teilung $t$ höchstens gleich der vierfachen Nenndicke $d$ sein sollte (vgl. Fig. 5).

Der Vorteil, den die Verwendung kleiner Glieder 8 bzw. 9 gegenüber größeren Kettengliedern 10 bietet, ergibt sich aus Fig. 4. In dieser Figur ist 11 der Keilspalt zwischen dem Fahrzeugreifen 12 und der Fahrbahn 13. Der Winkel $\alpha_1$ zwischen der Fahrbahn 13 und der Tangente 14 an dem Abstützpunkt 15 der Glieder 8 bzw. 9 am Fahrzeugreifen 12 beträgt vorzugsweise 10°, während der entsprechende Winkel $\alpha_2$ bei bekannten Konstruktionen bei etwa 25° liegt. Der Reibungskoeffizient $\mu$ ist nun gleich dem Tangens des Winkels $\alpha_1$ bzw. $\alpha_2$. Selbsthemmung liegt vor, wenn der $tg\alpha \leqq 2\mu$ ist. Da der Reibungskoeffizient $\mu$ zwischen Stahl und schneeglatter Fahrbahn bei 0,1 liegt, herrscht bei $\alpha_1$, d.h. tg 10°=0,176<0,2 Selbsthemmung, d.h. die Kettenstränge werden vom Reifen angenommen und in den Bereich der Bodenberührungsfläche 16 des Reifens 12 überführt (vgl. Fig. 3). Aus dieser Erkenntnis folgt, daß es zweckmäßig ist, die Kettenstränge so auszubilden, wie dies in Fig. 3, unten, angedeutet ist und oben bereits erläutert wurde. Die Glieder 8 mit größerer Greifhöhe werden hier durch die kleineren Glieder 9 im Keilspalt 11 gehalten, d.h. die kleineren Glieder 9 bilden Anker, die ein Abprallen der Kettenstränge 2, 3, 4, 5 vom Reifen 12 verhindern.

Durch die elastischen Zwischenstücke 7 wird erreicht, daß die Kettenstränge 2, 3, 4, 5 in eine optimale Lage gegenüber dem Reifen 12 überführt werden, wobei es sich als günstig erweist, wenn die Zwischenstücke 7 in ihrer Ruhestellung zur Drehachse 17 des Halters 1 einen Winkel $\beta$ von 40—80° einnehmen (vgl. Fig. 9 und bis in die unmittelbare Nähe des Fahrzeugreifens 12 reichen, wie dies in Fig. 2 dargestellt ist. Aufgrund der Elastizität der Zwischenstücke 7 können diese sich beim Auslauf der Kettenstranggruppen 6 aus dem Bereich der Bodenberührungsfläche 16 des Reifens verbiegen (vgl. Fig. 3) und so das Auslaufverhalten der Kettenstränge verbessern. Außerdem gestattet ihnen ihre Elastizität ein Ausweichen gegenüber den in Fig. 3 durch eine strichpunktierte Linie 18 angedeuteten Flanken 19 des Reifens 12 (vgl. auch Fig. 2).

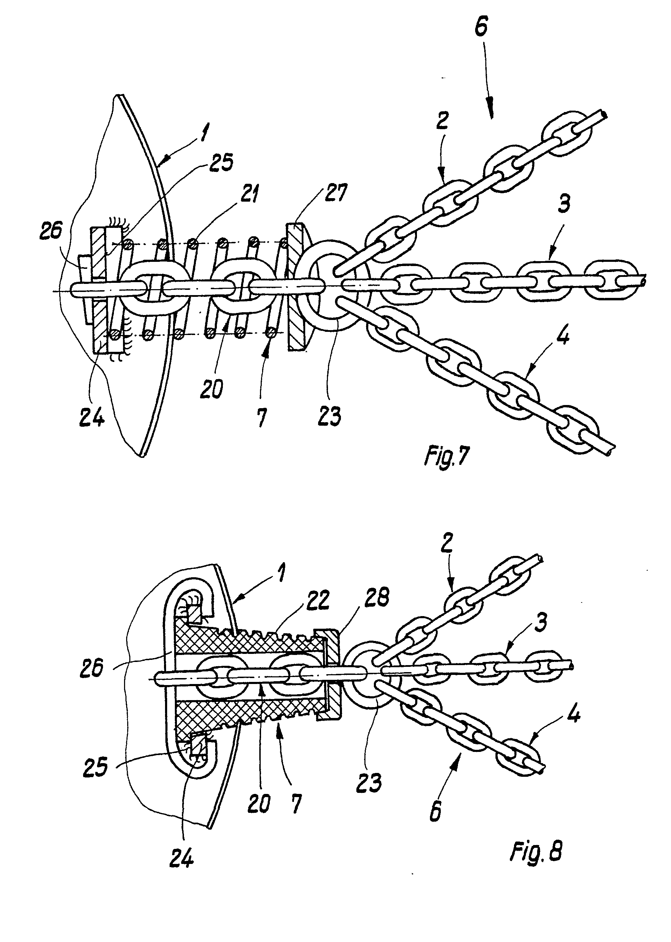

Verschiedene Ausbildungen der Zwischenstücke 7 sind in den Fig. 5—8 dargestellt. Wichtig ist bei allen gezeigten Lösungen, daß die Kettenstranggruppen 6 sicher mit dem Halter 1 verbunden sind. Man erreicht dies dadurch, daß man Zwischenstücke 7 verwendet, die aus unmittelbar mit dem Halter verbundenen Kettenstrangabschnitten 20 oder anderen mehrgliedrigen Gebilden und diese Kettenstrangabschnitte 20 umgebenden Federn 21 oder Verseifungshülsen 22 bestehen. Sowohl die Federn 21 als auch die Versteifungshülsen 22 können zylindrisch (vgl. Fig. 5, 6, 7) oder konisch (vgl. Fig. 8) ausgebildet sein.

Zur Verbindung der Kettenstrangabaschnitten 20 mit den Kettensträngen 2, 3, 4, 5 dienen vorzugsweise Ringe 23. Der Einsatz von Platten mit Langlöchern oder mehreren nebeneinander angeordneten Bohrungen ist allerdings auch möglich.

Die Federn 21 bzw. Versteifungshülsen 22 stützen sich an halterseitigen Widerlagern 24 über Stützflächen 25 ab, die schräg zur Drehachse 17 des Halters 1 verlaufen (vgl. Fig. 9). Zur sicheren Verankerung der Zwischenstücke 7 am Halter 1 dienen Verriegelungsorgane 26.

Als für den Spreizeffekt besonders vorteilhaft, erweisen sich Zwischenstücke 7 der in den Fig. 7 und 8 dargestellten Art. Beim Ausführungsbeispiel gemäß Fig. 7 ist die Feder 21 durch den Kettenstrangabschnitt 20 auf Druck vorgespannt. Der Ring 23 drückt zu diesem Zweck gegen ein zweites Widerlager 27, zwischen dem und dem ersten Widerlager 25 die Feder 21 angeordnet ist. Durch die Vorspannung der Feder 21 läßt sich das Spreizverhalten des Zwischenstückes an die jeweiligen Gegebenheiten anpassen.

Beim Ausführungsbeispiel gemäß Fig. 8 ist am Ende der Versteifungshüle 22 eine Kappe 28 angeordnet, die übermäßigen Beanspruchungen des freien Endes der Versteifungshülse 22 entgegenwirkt, indem sie das mit dem Ring 23 verbundene Endglied des Kettenstrangabschnittes 20 im Abstand vom Rand des Endes der Versteifungshülse 22 hält.

Fig. 9 zeigt Einzelheiten des Aufbaus eines ersten Halters 1. Er besteht aus einem Stütz- bzw. Reibrad 29, das drehbar auf dem Ansatz 30 eines Antriebsteiles 31 gelagert ist, welches seinerseits wiederum drehbar auf einem zylindrischen Abschnitt 32 eines Schraubbolzens 33 gelagert ist, der in die Buchse 34 eines Schwenkarmes 35 geschraubt ist. Das Antriebsteil 31 ist mit über seinen Umfang verteilten Rastausnehmungen 36 versehen, in die eine oder mehrere unter der Einwirkung einer Druckfeder 37 stehende Kugeln 38 greifen. Die Rastausnehmungen 36, die Druckfedern 37 und die Kugeln 38 bilden eine Rutschkupplung, welche Relativbewegungen zwischen dem Antriebsteil 31 und dem Stütz- bzw. Reibrad 29 ermöglicht, falls die von den Kettenstranggruppen 6 in den Antriebsteil 31 übertragenen Drehmomente einen bestimmten Wert übersteigen.

Ein zweiter für den Antrieb von Kettenstranggruppen 6 besonders gut geeigneter Halter 1 ist in Fig. 10 dargestellt. Auch er besitzt ein Stütz- bzw. Reibrad 29, welches drehbar gegenüber einem Antriebsteil 31 gelagert ist. An einem Schwenkarm 35 ist hier ein Gehäuse 39 befestigt, in dem ein Zahnkranz 40 mit Innenverzahnung 41 angeordnet ist. Auf der Innenverzahnung 41 wälzen sich Zahnräder 42 ab, deren Achsen 43 drehbar im Stütz- bzw. Reibrad 29 gelagert ist. Über die Zahnräder 42 wird die eine Außenverzahnung 44 tragende, drehbar im Gehäuse 39 gelagerte Welle 45 angetrieben, auf deren Abschnitt 46 drehbar das Stütz- bzw. Reibrad 29 gelagert ist. Mit der Welle 45 ist drehfest eine Scheibe 47 verbunden, die einen ersten Kupplungsbelag 48 trägt, der mit einem zweiten Kupplungsbelag 49 zusammenwirkt, der am Antriebsteil 31 angeordnet ist, das seinerseits wiederum drehbar auf einem Abschnitt 50 der Welle 45 gelagert ist. Aufgrund der gewählten Anordnung wird über die von den Kupplungsbelägen 48 und 49 gebildete Rutschkupplung und das vom Zahnkranz 40, den Zahnrädern 42 und der Außenverzahnung 44 der Welle 45 gebildete Getriebe das Antriebsteil 31 mit einer Drehzahl angetrieben, die größer ist als die Drehzahl des Stütz- bzw. Reibrades 29. Die auf die Kettenstranggruppen 6 ausgeübten Fliehkräfte erreichen mithin schon beim Anfahren schnell die gewünscht hohen Werte.

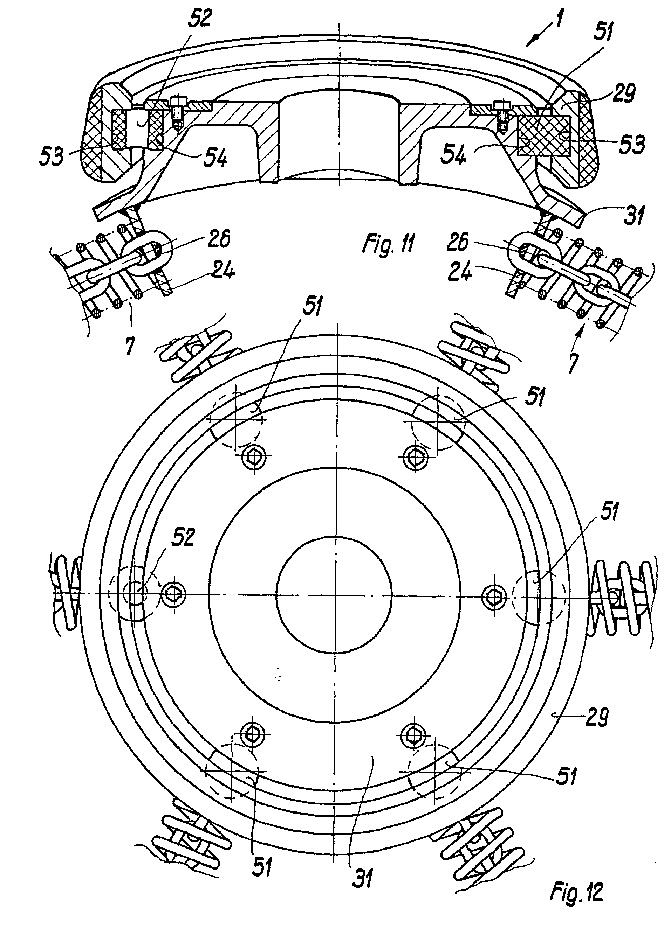

Die Fig. 11 und 12 schließlich zeigen einen Halter, dessen Stütz- bzw. Reibrad 29 sich über Federelemente 51 bzw. 52 am Antriebsteil 31 abstützt. Die aus elastischem Material bestehenden zylindrisch oder hohlzylindrisch ausgebildeten Federelemente 51, 52 stützen sich dabei mit Teiler ihres Umfanges in Rastnuten 53, 54 am Stütz- bzw. Reibrad 29 und am Antriebsteil 31 ab. Die Federelemente 51, 52 bestehen aus Gummi oder einem ähnlich elastischen Kunststoff und können neben der Abfederungsfunktion die Aufgabe einer Rutschkupplung übernehmen.

**Patentansprüche**

1. Gleitschutzvorrichtung für Kraftfahrzeuge mit mehreren von einem in eine Umlaufbewegung versetzbaren Halter (1) gehaltenen, über elastische Spreizarme bildende Zwischenstücke (7) mit diesem verbundenen Kettensträngen (2, 3, 4, 5), deren dem Halter (1) abgewandten Enden bei in der Betriebsstellung umlaufendem Halter (1) unter Fliehkrafteinwirkung vom Halter (1) weggeschleudert werden, und von denen zumindest Teile bei sich drehendem Farhzeugreifen (12) den Bereich der Bodenberührungsfläche des Reifens (12) passieren, dadurch gekennzeichnet, daß mindestens an einigen Zwischenstücken (7) Kettenstranggruppen (6) aus mindestens zwei Kettensträngen (2, 3) angreifen.

2. Vorrichtung nach Anspruch 1, dadurch gekennzeichnet, daß an jedem Zwischenstück (7) Kettenstranggruppen (6) aus mindestens zwei Kettensträngen (2, 3) angreifen.

3. Vorrichtung nach Anspruch 1 oder 2, dadurch gekennzeichnet, daß jede Kettenstranggruppe (6) drei bis fünf Kettenstränge umfaßt.

4. Vorrichtung nach Anspruch 3, dadurch gekennzeichnet, daß jede Kettenstranggruppe (6) aks drei oder vier Kettensträngen (2, 3, 4, 5) besteht.

5. Vorrichtung nach einem der Ansprüche 1 bis 4, dadurch gekennzeichnet, daß über den Umfang eines im wesentlichen tellerförmigen Halters (1) gleichmäßig fünf bis sieben Kettenstranggruppen (6) verteilt sind.

6. Vorrichtung Anspruch 5, dadurch gekennzeichnet, daß über den Umfang des Halters (1) sechs Kettenstranggruppen (6) verteilt sind.

7. Vorrichtung nach einem der Ansprüche 1 bis 6, dadurch gekennzeichnet, daß die Kettenstränge (2, 3, 4, 5) der Kettenstranggruppen (6) ungleich lang sind (Fig. 3, oben).

8. Vorrichtung nach einem der Ansprüche 1 bis 7, dadurch gekennzeichnet, daß die Kettenstränge (2, 3, 4, 5) der Kettenstranggruppen (6) Glieder (8, 9) aufweisen, die größenmäßig derart auf den vom Außendurchmesser des Fahrzeugreifens (12) abhängenden Keilspalt (11) zwischen Fahrzeugreifen (12) und Fahrbahn (13) abgestimmt sind, daß sie auf glatter Fahrbahn (13) durch Reibschluß im Keilspalt (11) gehalten werden.

9. Vorrichtung nach Anspruch 8, dadurch gekennzeichnet, daß sie senkrecht zur Fahrzeugreifenachse verlaufende Tangente (14) an den Abstützpunkt (15) eines größenmäßig auf den Außendurchmesser des Fahrzeugreifens (12) abgestimmten Gliedes (8, 9) am Fahrzeugreifen (12) zur Fahrbahn (13) einen Winkel $\alpha_1$ einnimmt, der kleiner als 12° ist.

10. Vorrichtung nach einem der Ansprüche 1 bis 9, dadurch gekennzeichnet, daß die Glieder (8, 9) der Kettenstränge (2, 3, 4, 5) der Kettenstranggruppen (6) unterschiedliche Abmessungen aufweisen, wobei die an den freien Enden der Kettenstränge (2, 3, 4, 5) angeordneten Glieder (9) kleinere Abmessungen als die dem Halter (1) näher gelegenen Glieder (8) haben (Fig. 3, unten).

11. Vorrichtung nach einem der Ansprüche 1 bis 10, dadurch gekennzeichnet, daß die Nenndicke (d) der Glieder (8, 9) der Kettenstränge (2, 3, 4, 5) der Kettenstranggruppen (6) maximal 5 mm beträgt.

12. Vorrichtung nach einem der Ansprüche 1 bis 11, dadurch gekennzeichnet, daß die äußere Breite (b) der Glieder (8, 9) maximal gleich der dreieinhalbfachen Nenndicke (d) ist.

13. Vorrichtung nach einem der Ansprüche 1 bis 12, dadurch gekennzeichnet, daß die Teilung (t) der Glieder (8, 9) der Kettenstränge (2, 3, 4, 5) maximal gleich der vierfachen Nenndicke (d) der Glieder (8, 9) ist.

14. Vorrichtung nach einem der Ansprüche 1 bis 13, dadurch gekennzeichnet, daß die Zwischenstücke (7) gegenüber der Drehachse (17) des Halters (1) einen Winkel (β) von 40—80° einnehmen.

15. Vorrichtung nach einem der Ansprüche 1 bis 14, dadurch gekennzeichnet, daß die Zwischenstücke (7) aus Kettenstrangabschnitten (20) und jeweils einer diese umgebenden und zu ihrer Versteifung dienenden Feder (21) oder Versteifungshülse (22) bestehen.

16. Vorrichtung nach Anspruch 15, dadurch gekennzeichnet, daß die Federn (21) als Schraubenfedern ausgebildet sind, deren Windungen einen Abstand voneinander einnehmen.

17. Vorrichtung nach Anspruch 15 oder 16, dadurch gekennzeichnet, daß die Federn (21) als durch die Kettenstrangabschnitte (20) vorgespannte Druckfedern ausgebildet sind.

18. Vorrichtung nach einem der Ansprüche 15 bis 17, dadurch gekennzeichnet, daß der Halter (1) mit Widerlagern (24) für die ihm zugewandten Enden der Federn (21) bzw. Versteifungshülsen (22) versehen ist.

19. Vorrichtung nach Anspruch 18, dadurch gekennzeichnet, daß die Zwischenstücke (7) durch lösbare Verriegelungsorgane (26) am Halter (1) verankert sind.

20. Vorrichtung nach Anspruch 18 oder 19, dadurch gekennzeichnet, daß die halterseitigen Widerlager (24) für die Federn (21) bzw. Versteifungshülsen (22) schräg zur Drehachse des tellerförmigen Halters (1) verlaufende Stützflächen (25) für die Enden der Federn (21) bzw. Versteifungshülsen (22) aufweisen.

21. Vorrichtung nach einem der Ansprüche 14 bis 20, dadurch gekennzeichnet, daß jeweils ein Ende der zur Versteifung dienenden Federn (21) bzw. Versteifungshülsen (22) kippfest am Halter (1) gelagert ist.

22. Vorrichtung nach einem der Ansprüche 15 bis 21, dadurch gekennzeichnet, daß die Zwischenstücke (7) mit den Kettensträngen (2, 3, 4, 5) der Kettenstranggruppen (6) über Bauteile verbunden sind, die die Widerlager (27) für die dem Halter (1) abgewandten Enden der Federn (21) oder Versteifungshülsen (22) abstützen.

23. Vorrichtung nach Anspruch 22, dadurch gekennzeichnet, daß die die Zwischenstücke (7) mit den Kettenstranggruppen (6) verbindenden Bauteile als Ringe (23) ausgebildet sind.

24. Vorrichtung nach einem der Ansprüche 1 bis 23 mit einem zur Einleitung der Umlaufbewegung in den Halter dienenden Stütz- bzw. Reibrad, dadurch gekennzeichnet, daß der Halter (1) ein drehbar gegenüber dem Stütz- bzw. Reibrad (29) gelagertes Antreibsteil (31) für die Kettenstranggruppen (6) aufweist, das mit dem Stütz- bzw. Reibrad (29) über ein Getriebe (40, 42, 44) in Verbindung steht, das zur Erhöhung der Drehzahl des Antriebsteils (31) gegenüber der Drehzahl des Stütz- bzw. Reibrades (29) dient.

25. Vorrichtung nach Anspruch 24, dadurch gekennzeichnet, daß das Getriebe (40, 42, 44) als Planetengetriebe ausgebildet ist.

26. Vorrichtung nach Anspruch 24 oder 25, dadurch gekennzeichnet, daß das Stütz- bzw. Reibrad (29) über begrenzte Radialbewegungen zulassende Federelemente (51, 52) mit dem Antriebsteil (31) des Halters (1) verbunden ist.

27. Vorrichtung nach Anspruch 26, dadurch gekennzeichnet, daß die Federelemente (51, 52) in Rastnuten (53, 54) an der Innenfläche des Stütz- bzw. Reibrades (29) und an der Außenfläche des Antriebsteils (31) des Halters (1) ragen.

28. Vorrichtung nach Anspruch 26 oder 27, dadurch gekennzeichnet, daß die Federelemente (51, 52) zylindrisch und/oder hohlzylindrisch ausgebildet sind und aus Gummi oder einen ähnlich elastischen Kunststoff bestehen.

29. Vorrichtung nach Anspruch 27 und 28, dadurch gekennzeichnet, daß die Federelemente (51, 52) mit einem Teil ihres Umfanges in die Rastnuten (53, 54) ragen.

30. Vorrichtung nach einem der Ansprüche 1 bis 29 mit einem zur Einleitung der Umlaufbewegung in den Halter dienenden Stütz- bzw. Reibrad, dadurch gekennzeichnet, daß der Halter (1) ein drehbar gegenüber dem Stütz- bzw. Reibrad (29) gelagertes Antriebsteil (31) für die Kettenstranggruppen (6) aufweist, das mit dem Stütz- bzw. Reibrad (29) über eine Rutschkupplung (36, 37, 38; 48, 49; 51, 52, 53, 54) verbunden ist.

31. Vorrichtung nach Anspruch 30 und einem der Ansprüche 26 bis 29, dadurch gekennzeichnet, daß die Federelemente (51, 52) Teile der Rutschkupplung bilden.

**Revendications**

1. Dispositif antidérapant pour véhicules automobiles comportant plusieurs brins de chaîne (2, 3, 4, 5) maintenus par un support (1) pouvant être mis en rotation, reliés à celui-ci par des pièces intermédiaires (7) formant des bras d'écartement élastiques, les extrémités desdits brins de chaîne, éloignées du support (1), étant projetées, sous l'effet de la force centrifuge, à l'écart du support (1) tournant en position de fonctionnement, et dont au moins des éléments de ceux-ci passent dans la région de la surface du pneu du véhicule (12) en contact avec le sol, lorsque ce pneu tourne, caractérisé en ce que des groupes de brins de chaîne (6), constitués d'au moins deux brins de chaîne (2, 3), agissent au moins sur certaines pièces intermédiaires (7).

2. Dispositif selon la revendication 1, caractérisé en ce que des groupes de brins de chaîne (6) constitués d'au moins deux bras de chaîne (2, 3), agissent sur chaque pièce intermédiaire (7).

3. Dispositif selon la revendication 1 ou 2, caractérisé en ce que chaque groupe de brins de chaîne (6) comprend trois à cinq brins de chaîne.

4. Dispositif selon la revendication 3, caractérisé en ce que chaque groupe de brins de chaîne (6) est constitué de trois ou quatre brins de chaîne (2, 3, 4, 5).

5. Dispositif selon l'une des revendications 1 à 4, caractérisé en ce que cinq à sept groupes de brins de chaîne (6) sont uniformément répartis sur le pourtour d'un support (1) à peu près en forme de plateau.

6. Dispositif selon la revendication 5, caractérisé en ce que six groupes de brins de chaîne (6) sont répartis sur le pourtour du support (1).

7. Dispositif selon l'une des revendications 1 à 6, caractérisé en ce que les brins de chaîne (2, 3, 4, 5) des groupes de brins de chaîne (6) sont de longueur différente (figure 3, en haut).

8. Dispositif selon l'une des revendications 1 à 7, caractérisé en ce que les brins de chaîne (2, 3, 4, 5) des groupes de brins de chaîne (6), comportent des maillons (8, 9) dont les dimensions sont adaptées à la fente en coin (11), compris entre les pneus du véhicule (12) et la chaussée (13), dépendant du diamètre extérieur du pneu (12) du véhicule, de manière à ce qu'ils puissent être maintenus sur chaussée (13) verglacée, dans la fente en coin (11), par friction.

9. Dispositif selon la revendication 8, caractérisé en ce que la tangente (14) perpendiculaire à l'axe du pneu du véhicule, prend un angle $\alpha_1$, inférieur à 12°, par rapport à la chaussée (13) au point d'appui (15), sur le pneu de véhicule (12), d'un maillon (8, 9) dont les dimensions sont fonction du diamètre extérieur du pneu de véhicule (12).

10. Dispositif selon l'une des revendications 1 à 9, caractérisé en ce que les maillons (8, 9) des brins de chaîne (2, 3, 4, 5) des groupes de brins de chaîne (6) présentent des dimensions différentes, les maillons (9) placés aux extrémités libres des brins de chaîne (2, 3, 4, 5), ayant des dimensions inférieures aux maillons (8) situés à proximité du support (1) (figure 3, en bas).

11. Dispositif selon l'une des revendications 1 à 10, caractérisé en ce que l'épaisseur nominale (d) des maillons (8, 9) des brins de chaîne (2, 3, 4, 5) des groupes de brins de chaîne (6), est de 5 mm au maximum.

12. Dispositif selon l'une des revendications 1 à 11, caractérisé en ce que la largeur extérieure (b) des maillons (8, 9) est au maximum égale à trois fois et demi l'épaisseur nominale (d).

13. Dispositif selon l'une des revendications 1 à 12, caractérisé en ce que le pas (t) des maillons (8, 9) des brins de chaîne (2, 3, 4, 5) est au maximum égal à quatre fois l'épaisseur nominale (d) des maillons (8, 9).

14. Dispositif selon l'une des revendications 1 à 13, caractérisé en ce que les pièces intermédiaires (7) forment un angle ($\beta$) compris entre 40° et 80°, par rapport à l'axe de rotation (17) du support (1).

15. Dispositif selon l'une des revendications 1 à 14, caractérisé en ce que les pièces intermédiaires (7) sont constituées de portions de brins de chaîne (20) et d'un ressort (21) ou d'une douille de renfort (22), les entourant et servant à les renforcer.

16. Dispositif selon la revendication 15, caractérisé en ce que les ressorts (21) sont des ressorts hélicoïdaux dont les spires sont écartées les unes des autres.

17. Dispositif selon la revendication 15 ou 16, caractérisé en ce que les ressorts (21) sont des ressorts de pression précontraints à travers les portions de brins de chaîne (20).

18. Dispositif selon l'une des revendications 15 à 17, caractérisé en ce que le support (1) est pourvu de butées (24) pour les extrémités tournées vers lui des ressorts (21) ou des douilles de renfort (22).

19. Dispositif selon la revendication 18, caractérisé en ce que les pièces intermédiaires (7) sont ancrées sur le support (1) par des organes de verrouillage (26) amovibles.

20. Dispositif selon la revendication 18 ou 19, caractérisé en ce que les butées (24) côté support présentent, pour les ressorts (21) ou douilles de renfort (22), des surfaces d'appui (25) obliques par rapport à l'axe de rotation du support (1) en forme de plateau, pour les extrémités des ressorts (21) ou des douilles de renfort (22).

21. Dispositif selon l'une des revendications 14 à 20, caractérisé en ce que dans chaque cas une extrémité des ressorts (21) ou douilles de renfort (22), servant de renfort, est montée sur le support (1) de manière à ne pas pouvoir basculer.

22. Dispositif selon l'une des revendications 15 à 21, caractérisé en ce que les pièces intermédiaires (7) sont reliées aux brins de chaîne (2, 3, 4, 5) des groupes de brins de chaîne (6) par des composants qui soutiennent les butées (27) pour les extrémités des ressorts (12) ou des douilles de renfort (22), éloignées du support (1).

23. Dispositif selon la revendication 22, caractérisé en ce que les composants reliant les pièces intermédiaires (7) aux groupes de brins de chaîne (6), sont des anneaux (23).

24. Dispositif selon l'une des revendications 1 à 23, comportant une roue d'appui ou de friction servant à transmettre le mouvement de rotation au support, caractérisé en ce que le support (1) présente un élément d'entraînement (31), monté tournant par rapport à la roue d'appui ou de friction (29), pour les groupes de brins de chaîne (6), lequel est relié à la roue d'appui ou de friction (29), par une transmission (40, 42, 44) qui sert à augmenter la vitesse de rotation de l'élément d'entraînement (31) par rapport à la vitesse de rotation de la roue d'appui ou de friction (29).

25. Dispositif selon la revendication 24, caractérisé en ce que la transmission (40, 42, 44) est un engrenage planétaire.

26. Dispositif selon la revendication 24 ou 25, caractérisé en ce que la roue d'appui ou de friction (29) est reliée à l'élément d'entraînement (31) du support (1), par des éléments formant ressort (51, 52), autorisant des déplacements radiaux limités.

27. Dispositif selon la revendication 26, caractérisé en ce que les éléments formant ressort (51, 52) pénètrent dans des rainures d'encliquetage (53, 54) pratiquées dans la face intérieure de la roue d'appui ou de friction (29) et dans la face extérieure de l'élément d'entraînement (31) du support (1).

28. Dispositif selon la revendication 26 ou 27, caractérisé en ce que les éléments formant ressort (51, 52) sont cylindriques et/ou cylindriques creux, et sont réalisés en caoutchouc ou en une matière plastique élastique similaire.

29. Dispositif selon les revendications 27 et 28, caractérisé en ce que les éléments formant ressort (51, 52) pénètrent, par une partie de leur pourtour, dans les rainures d'encliquetage (53, 54).

30. Dispositif selon l'une des revendications 1 à 29, comportant une roue d'appui ou de friction servant à transmettre le mouvement de rotation au support, caractérisé en ce que le support (1) présente un élément d'entraînement (31), monté tournant par rapport à la roue d'appui ou de friction (29), pour les groupes de brins de chaîne (6), lequel est relié à la roue d'appui ou de friction (29) par un accouplement glissant (36, 37, 38; 48, 49; 51, 52, 53, 54).

31. Dispositif selon la revendication 30, et l'une des revendications 26 à 29, caractérisé en ce que les éléments formant ressort (51, 52) constituent parties de l'accouplement glissant.

**Claims**

1. An anti-skid means for motor vehicles comprising a number of chains (2, 3, 4, 5) held in a rotatable holder (1) and connected thereto via intermediate members (7) which constitute resilient expanding arms, the ends of the chains remote from the holder (1) being thrown by centrifugal force away from the holder (1) when the holder (1) is rotating in the operating position, and at least parts of the chains entering the area of contact between the ground and the tyre (12) when the tyre (12) rotates, characterised in that groups (6) of at least two chains (2, 3) engage at least some intermediate members (7).

2. Means according to Claim 1, characterised in that groups (6) of at least two chains (2, 3) engage each intermediate member (7).

3. Means according to Claim 2 or 3, characterised in that each group (6) comprises three to five chains.

4. Means according to Claim 3, characterised in that each group (6) comprises three or four chains (2, 3, 4, 5).

5. Means according to any of Claims 1 to 4, characterised in that five to seven groups of chains (6) are distributed around the periphery of a substantially plate-shaped holder (1).

6. Means according to Claim 5, characterised in that six groups (6) of chains are distributed around the periphery of the holder (1).

7. Means according to any of Claims 1 to 6, characterised in that the chains (2, 3, 4, 5) in the groups (6) are of unequal length (Fig. 3, top).

8. Means according to any of Claims 1 to 7, characterised in that the chains (2, 3, 4, 5) in the groups (6) have links (8, 9) adapted in size to the wedge-shaped gap (11), depending on the outer diameter of the tyre (12), between the tyre (12) and the road (13), so that the links are held by frictional engagement in the wedge-shaped gap (11) on a smooth road (13).

9. Means according to Claim 8, characterised in that the tangent (14) perpendicular to the tyre axis and at the point (15) where a link (8, 9) bears on the tyre (12), the size of the link being adapted to the outer diameter of the tyre (12), is at an angle $\alpha_1$ less than 12° to the road (12).

10. Means according to Claims 1 to 9, characterised in that the links (8, 9) of the chains (2, 3, 4, 5) in the groups (6) have differing dimensions, the links (9) at the free ends of the chains (2, 3, 4, 5) being smaller than the links (8) nearer the holder (1) (Fig. 3, bottom).

11. Means according to any of Claims 1 to 10, characterised in that the nominal thickness (d) of the links (8, 9) of the chains (2, 3, 4, 5) in the groups (6) is not more than 5 mm.

12. Means according to any of Claims 1 to 11, characterised in that the outer width (b) of the links (8, 9) is not more than $3\frac{1}{2}$ times the nominal thickness (d).

13. Means according to any of Claims 1 to 12, characterised in that the spacing (t) of the links (8, 9) of the chains (2, 3, 4, 5) is not more than four times the rated thickness (d) of the links (8, 9).

14. Means according to any of Claims 1 to 13, characterised in that the intermediate membes (7) are at an angle (β) of 40—80° to the axis of rotation (17) of the holder (1).

15. Means according to any of Claims 1 to 14, characterised in that the intermediate members (7) comprise chain portions (20) and respective springs (21) or reinforcing sleeves (22) surrounding the portions and reinforcing them.

16. Means according to Claim 15, characterised in that the springs (21) are helical springs with spaced-apart turns.

17. Means according to Claim 15 or 16, characterised in that the springs (21) are compression springs prestressed by the chain portions (20).

18. Means according to any of Claims 15 to 17, characterised in that the holder (1) has abutments (24) for the ends of the springs (21) for reinforcing sleeves (22) facing the holder.

19. Means according to Claim 18, characterised in that the intermediate members (7) are secured to the holder (1) by releasable locking means (26).

20. Means according to claim 18 or 19, characterised in that the abutments (24) for the springs (21) or reinforcing sleeves (22) on the side of the holder have supporting surfaces (25) for the ends of the springs (21) or reinforcing sleeves (22), the supporting surfaces extending at an angle to the axis of rotation of the plate-shaped holder (1).

21. Means according to any of Claims 14 to 20, characterised in that one end of each reinforcing spring (21) or sleeve (22) is nontiltably mounted on the holder (1).

22. Means according to any of Claims 15 to 21, characterised in that the intermediate members (7) are connected to the chains (2, 3, 4, 5) in the groups (6) via components which bear against the abutments (27) for the ends of the springs (21) or reinforcing sleeves (22) remote from the holder (1).

23. Means according to Claim 22, characterised in that the components connecting the intermediate members (7) to the groups (6) of chains are rings (23).

24. Means according to any of Claims 1 to 23 comprising a supporting or friction wheel for imparting motion to the holder, characterised in that the holder (1) comprises a driving part (31) for the groups (6) of chains, the driving part being mounted so as to be rotatable relative to the supporting or friction wheel (29) and being connected to the supporting or friction wheel (29) via a gear (40, 42, 44) for increasing the speed of the drive part (31) relative to the speed of the supporting or friction wheel (29).

25. Means according to Claim 24, characterised in that the gear (40, 42, 44) is a planetary gear.

26. Means according to Claim 24 or 25, characterised in that the supporting or friction wheel (29) is connected to the driving part (31) of the holder (1) via spring elements (51, 52) which permit limited radial movements.

27. Means according to Claim 26, characterised in that the spring elements (51, 52) project into locking grooves (53, 54) on the inner surface of the supporting or friction wheel (29) and on the outer surface of the drive part (31) of the holder (1).

28. Means according to claim 26 or 27, characterised in that the spring elements (51, 52) are cylindrical and/or hollow cylindrical and made of rubber or a similar elastomer.

29. Means according to Claim 27 and 28, characterised in that a part of the periphery of the spring elements (51, 52) engages in the peripheral grooves (53, 54).

30. Means according to any of Claims 1 to 29 comprising a supporting or friction wheel for imparting motion to the holder, characterised in that the holder (1) has a drive part (31) for the groups (6) of chains, the drive part being mounted so as to be rotatable relative to the supporting or friction wheel (29), and being connected to the supporting or friction wheel (29) via a sliding clutch (36, 37, 38; 48, 49; 51, 52, 53, 54).

31. Means according to Claim 30 and any of Claims 26 to 39, characterised in that spring elements (51, 52) form parts of the sliding clutch.

Fig. 1

Fig. 2

Fig. 3

Fig. 4

Fig. 5

Fig. 6

Fig. 7

Fig. 8

4

EP 0 211 798 B1

Fig. 9

Fig. 10

Fig. 11

Fig. 12